# EUROPÄISCHE PATENTSCHRIFT

(11) **EP 0 466 031 B1**
(45) Veröffentlichungstag und Bekanntmachung des Hinweises auf die Patenterteilung: **12.07.1995**
(21) Anmeldenummer: 91111128.4
(22) Anmeldetag: 04.07.1991
(51) Int. Cl.: H05B 39/04

(54) **Helligkeitssteuer-Schaltungsanordnung**
Dimmer circuit
Circuit gradateur de lumière

(30) Priorität: 06.07.1990 DE 4021640
(43) Veröffentlichungstag der Anmeldung: 15.01.1992
(73) Patentinhaber: Zumtobel Aktiengesellschaft, A-6850 Dornbirn (AT)
(72) Erfinder: Schmid, Thomas, A-6850 Dornbirn (AT)
(74) Vertreter: Schmidt-Evers, Jürgen, Dipl.-Ing.

(56) Entgegenhaltungen:
- EP-A- 0 331 157
- GB-A- 2 204 191
- US-A- 4 506 318

## Beschreibung

Die Erfindung betrifft eine Schaltungsanordnung zur Helligkeitssteuerung gemäß Oberbegriff des Anspruches 1. Sie betrifft ferner ein Verfahren zur Variation der Leuchtstärke einer Niedervolt-Halogenlampe gemäß Oberbegriff des Anspruchs 14.

Schaltungen zur Steuerung der Helligkeit oder Leuchtstärke (Dimmen) von Glühlampen sind allgemein bekannt. Zu unterscheiden ist hierbei zwischen unmittelbar mit der Netzspannungs-Versorgung betriebenen Glühlampen und mittelbar über Trenntransformator betiebenen Glühlampen (**N**ieder**V**olt-Halogenlampen NV). Erstere werden direkt an ein Versorgungsnetz (idR 200V,50Hz) geschaltet, die Steuerung der Helligkeit erfolgt durch bekannte Phasenanschnittsteuerung (Zündverzögerung) mittels Triac und Diac.

Letzere sind schwieriger in ihrer Helligkeit einzustellen, da als Lastkreis ein induktiv wirkender spannungsreduzierender Transformator mit sekundärseitiger Niederspannungs-Glühlampe NV verwendet wird. Schließt man die über den Transformator (üblicherweise 220V/12V) betriebenen Niedervoltlampen an einen herkömmlichen Phasenanschnittdimmer an, so ergeben sich Symmetrieprobleme, da ein herkömmlicher Dimmer bei Phasenanschnitt-Betrieb nicht ohne weiteres in der Lage ist eine reine Wechselspannung, wie sie für einen Transformator benötigt wird, abzugeben. Es entstehen ferner Probleme schutztechnischer Natur, ein Trenntransformator stellt zwar ein passives Bauelement dar, jedoch ist es deutlich empfindlicher gegenüber Strom- und Temperaturüberhöhungen als unmittelbar betriebene Lampen. Schließlich bildet die notwendige Baugröße eines magnetisch koppelnden Übertragers (Trenntransformator) ein gewichtiges Problem bei dem Betrieb und der Helligkeitsregelung/Steuerung von NV-Halogenleuchten.

Halogenleuchten sind besonders vorteilhaft in ihrem Einsatz aufgrund ihrer erhöhten Lebensdauer, des vergrößerten Wirkungsgrades sowie der vergrößerten Leuchtkraft. Gleichzeitig erlauben die Niedervolt-Halogenleuchten eine größere Kreativität bei der Gestaltung von Leuchten und Beleuchtungskörpern, da sie eine sehr geringe Größe aufweisen. Aufgrund der hohen Leuchtkraft und ihrer geringen Größe ist jedoch die Leuchtdichte besonders hoch und bisweilen kann es störend sein, eine nahezu punktförmige Leuchtquelle unmittelbar, d.h. ohne Reflektor und/oder Abdeckung oder Abschirmung, anzuschauen. Eine Helligkeitsregelung ist hierbei von großem Vorteil.

Dimmvorrichtungen für Niedervolt-Halogenleuchten sind beispielsweise aus GB-A-2204191 oder EP-A3-0331157 bekannt. Eine derartige Dimmvorrichtung umfaßt eine Gleichrichterschaltung, um eine Versorgungs-Wechselspannung in eine gleichgerichtete Niederfrequenz-Zwischenkreisspannung umzuwandeln, sowie einen Hochfrequenz-Wechselspannungsgenerator, der die Zwischenkreisspannung in eine Hochfrequenz-Wechselspannung konvertiert und diese an einen Leistungsübertrager weitergibt. Der Leistungsübertrager ist einer Leuchte zur Variation der dem Wechselspannungsgenerator entnommenen Wirkleistung vorgeschaltet. Die Dimmung erfolgt auf herkömmliche Weise durch Phasenanschnittssteuerung.

Gemäß der GB-A-2204191 umfaßt die Dimmvorrichtung des weiteren ein variierbares Verzögerungs-Schaltungsglied, z.B. einen Tiefpaß, das eine Synchronkapazität beinhaltet. Über einen Diac wird eine Synchronschaltung angesteuert, die den Wechselspannungsgenerator aktiviert, wenn die Ladung des Synchronkondensators den Schwellenwert des Diacs überschreitet. Dabei wird die Synchronkapazität entladen. Die Synchronkapazität lädt sich jedoch parasitär bzw. halbwellenweise mit der Netzspannungsfrequenz auf, wenn eine oder meherere Netzspannungs-Halwellen lang keine Zündung des Wechselspannungsgenerators durchgeführt wird. Da die Synchronkapazität nur bei Aktivierung des Wechselspannungsgenerators entladen wird, lädt sich die Synchronkapazität schrittweise parasitär auf. Bei einer beliebigen Halbwelle übersteigt schließlich die Spannung der Synchronkapazität die Zündspannung des Diacs und es wird somit eine parasitäre und unerwünschte Hochfrequenz-Schwingung des Wechselspannungsgenerators initiiert.

Der Erfindung liegt somit die Aufgabe zugrunde, eine verbesserte, insbesondere eine verkleinerte Helligkeitssteuer-Schaltungsanordnung zu schaffen, die eine kontinuierliche Helligkeitsregelung zwischen Null und Maximum von insbesondere Niedervolt-Halogenlampen ermöglicht.

Unter anderem dieser Aufgabe ist erfindungsgemäß bei einer Schaltungsanordnung gemäß Oberbegriff des Anspruchs 1 durch das in seinem Kennzeichen angegebene Merkmal gelöst. Die Aufgabe ist ferner durch die im Kennzeichen des Anspruchs 14 angegebenen Merkmale gelöst. Eine erfindungsgemäße Helligkeitssteuerung ergibt schließlich die Anwendung der Synchronschaltungsanordnung gemäß Anspruch 1 bei einem fremdgeführten Wechselrichter gemäß Anspruch 16.

Ein wesentlicher Effekt der Erfindung liegt in der nunmehr präzisen Netz-Synchronisation eines erfindungsgemäßen NV-Halogendimmers. Hierbei wird insbesondere die Helligkeitsregelung bis zum Wert Null mit einer präzisen Netzsynchronisation erreicht. Parasitäre Schwingungen und sporadisches Aufleuchten oder Flackern der Niedervolt-Halogenlampe wird ebenso vermieden, wie ein Leistungssprung/Helligkeitssprung bei langsamen Aufsteuern der Helligkeit ausgehend von dem Wert Null.

Ein wesentlicher Zweck der Erfindung liegt in der Erhöhung der Sicherheitsmaßnahmen und dem verbesserten Schutz, dies betrifft sowohl den Leerlauf- als auch den Kurzschlußfall. Verbessert wird gleichfalls die Temperatur- und Strommaximalwertüberwachung. Letzteres ist insbesondere deshalb von Vorteil, weil Niedervolt-Halogenlampen in kaltem Zustand einen äußerst niedrigen Innenwiderstand aufweisen, der Transformator mithin kurzzeitig sehr hohe Einschaltströme liefern muß.

Ein weiterer wesentlicher erfindungsgemäßer Effekt ist die Reduzierung der Baugröße sowie die Senkung des mechanischen Gewichtes des eingesetzten Leistungstransformators. Gleichzeitig kann aufgrund der Erfindung und der hohen Wärmeträgheit des NV-Glühwendel eine versorgungsspannungsmäßige Glättung entfallen, dies senkt Kosten. Das abgegebene Licht ist trotz starker Momentanwert-Leistungspulsationen nahezu gleichmäßig.

Vorteilhafte Ausgestaltungen der Erfindung sind in den Verfahrens- und Vorrichtungsunteransprüchen angegeben.

Besonders vorteilhaft ist die hochfrequenzperiodische und niederfrequenzperiodische Kombinationsynchronisation gemäß Anspruch 14. Hochfrequenzperiodisch betrifft hierbei die Wechselrichter-Ausgangsspannung u_{W}, welche etwa 40kHz betragen kann. Niederfrequenzperiodisch betrifft die Netzspannungsfrequenz von beispielsweise 50Hz oder 60Hz. Globales Synchronverhalten bietet dabei alleinig vorteilhaft die niederfrequenzperiodische Synchronisation, welche periodisch ein Verzögerungsglied (PT1) rücksetzt/intitialisiert. Ausgehend von der über das PT1 gebildeten und in ihrer Steigung variierbaren Steuerspannung u_{St} wird ein mit vorgegebener Hochfrequenz schwingender Wechselrichter nach einer variablen Verzögerungszeit t_{Z} oder einem variablen Zündverzug α (Zündwinkel) freigegeben. Während der Schwingung der Wechselrichterausgangsspannung u_{W}(t) findet laufend eine hochfrequenzgesteuerte Synchronisation des PT1 statt. Beide Synchronisationen gemeinsam erlauben die Vorgabe gleicher Anfangsbedingungen für das PT1 am Beginn jeder Versorgungsspannungs-Halbwelle u_{N}(t), dies bei beliebiger Helligkeit ebenso wie bei Helligkeit Null.

Vorteilhafte Schutzmaßnahmen für den Leistungstransformator sowie für die Betriebssicherheit sind Gegenstände der der Ansprüche 8 (Überlastschutz), 9 (Temperaturbegrenzung), 10 (Schwingungstabilisierung) und 11 (Leerlaufschutz).

Anspruch 4 ist gerichtet auf einen selbstgeführten (eigengeführten oder selbstschwingenden) Wechselrichter wie er besonders vorteilhaft für die Steuerschaltungsanordnung gemäß Anspruch 1 verwendbar ist. Neben einem selbstgeführten Wechselrichter bildet der Einsatz eines fremdgeführten (extern geführten) Wechselrichters, d.h. mit vorgebbarer Ausgangsfrequenz über ein Steuer-Wechselspannungssignal, eine eigenständige Lösungsvariante.

Vorteilhaft finden als Wechselspannungsgenerator gem. Anspruch 2 eine Halbbrückenschaltung oder gemäß Anspruch 3 eine Vollbrückschaltung, bei welcher der Kapazitätszweig entfallen kann, - sowohl in fremdgeführter als auch in selbstgeführter Steuerweise - Anwendung. Die Vorgabe einer Synchronschwelle gemäß Anspruch 5 bietet Vorteile bei der Festlegung der Empfindlichkeit der Nullsynchronisation gemäß Anspruch 1. Vorteilhafte Weiterbildung, die auf Dimming und Selbsthaltewirkung des Wechselrichters gerichtet sind Gegenstände der Ansprüche 12 und 13.

Die gemäß Anspruch 14 hervorgehobene besonders vorteilhafte Kombination der Niederfrequenz- und Hochfrequenzsynchronisation ist in ebenfalls vorteilhafter Weise jeweils alleinig anwendbar, dies ist eigenständig jeweils Gegenstand des Anspruchs 7 und des Anspruchs 10. Eine Entkopplung gemäß Anspruch 6 ist für die Niederfrequenzsynchronisation dann besonders vorteilhaft, wenn der Lastteil der Helligkeitssteuer-Schaltungsanordnung Glättungskapazitäten, insbesondere den kapazitiven Zweig für den eigengeführten Wechselrichter in Halbbrückenschaltung, aufweist.

Die Erfindung wird nachfolgend anhand von Ausführungsbeispielen näher erläutert, hierbei wird ein selbstgeführter Wechselrichter als Wechselspannungsgenerator 20 eingesetzt.

Es soll an dieser Stelle betont werden, daß dies keine Einschränkung der Erfindung auf selbstgeführte Wechselrichter darstellen soll. Vielmehr finden fremdgeführte Wechselrichter besonders vorteilhaft dann Anwendung, wenn die Frequenz der Ausgangs-Wechselspannung u_{W}(t) variiert oder stabilisiert werden soll.

Es zeigen
**Fig.1** ein Schaltungsdiagramm eines Ausführungsbeispiels der Erfindung,
**Fig.2** einen Ausschnitt der Schaltungsanordnung gemäß Fig.1 unter besonderer Berücksichtigung der Verschaltung eines Steuerübertragers Ü für einen selbstgeführten Wechselrichter,
**Fig.3** ein Zeitdiagramm zur Darstellung der Funktionsweise des Ausführungsbeispiels gemäß der Figuren 1 und 2, mit der Schwingungs-Einsatzzeitpunkt-Verschiebung α1=36°,
**Fig.4** ein der Fig.3 entsprechendes Diagramm mit der Schwingungs-Einsatzzeitpunkt-Verschiebung α2=126°,
**Fig.5** zwei zeitkorrespondierende Zeitdiagramme zur Darstellung der Abhängigkeit von Steuerspannung u_{St}(t) und Hochfrequenz-Laststrom i_{L}(t) im Leistungsübertrager Tr.

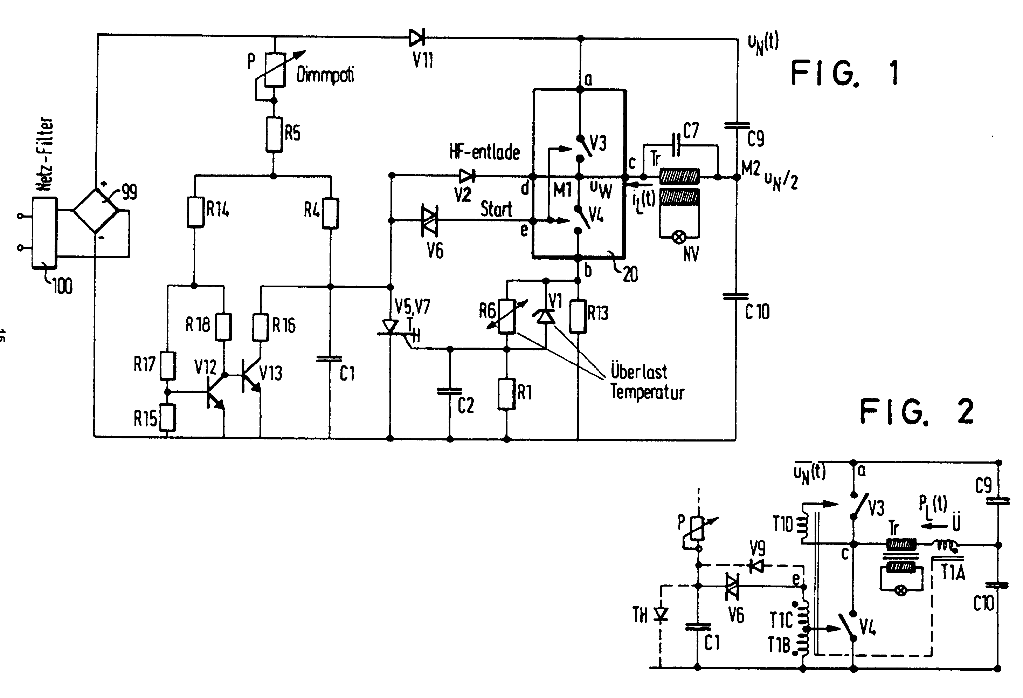

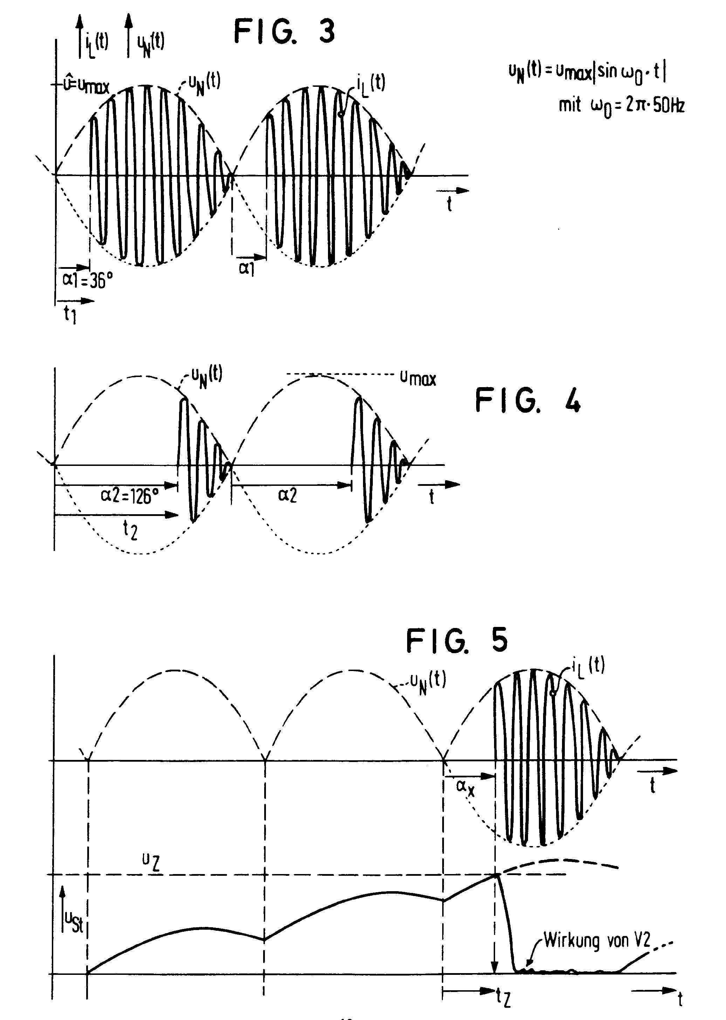

Fig.1 zeigt das Ausführungsbeispiel eines Dimmers für Niedervolt-Halogenlampen und ist in engem Zusammenhang mit dem Zeitdiagramm von Fig.3 zu sehen. Grundsätzlich arbeitet der Dimmer mit einer Zündverschiebung α, in Fig.3 beispielhaft als α1=36° eingezeichnet, oder einer dieser Zündverschiebung entsprechenden Schwingungs-Einsatzzeitpunkts-Verschiebung t1,t2. Wie in Fig.3 zunächst an der Wirkungsweise ersichtlich, wird ein Hochfrequenz-Schwingungspaket (burst) zeitverschoben aktiviert. Es weist eine umhüllende Funktion auf, die der gleichgerichteten Netzspannung u_{N}(t) entspricht (näherungsweise proportional ist). Die Frequenzverhältnisse sind in Fig.3 aus Anschaulichkeitsgründen nicht realitätsgetreu dargestellt, im praktischen Anwendungsfall würde die Hochfrequenz (HF) von i_{L}(t) oder von u_{W}(t) eines Wechselrichters 20 ca.40kHz betragen während die umhüllende u_{N}(t) eine Halbwellen-Periodendauer von 10msec aufweist, was einer gleichgerichteten 50Hz Niederfrequenz-Schwingung (NF) entspricht. In realitätsgetreuem Maßstab dargestellt, müßten demnach ca. 800 Sinus-Vollschwingungen der Hochfrequenz innerhalb einer NF-Halbwellezeitdauer zu liegen kommen.

**Fig.1** zeigt im linken Halbbild (durch eine Entkopplungsdiode V11 getrennt) den Steuerschaltungsteil und im rechten Halbbild den Leistungsteil eines NV-Halogenlampendimmers. Die Netzwechselspannung wird über einen Netzfilter 100 und einen Gleichrichter, vorzugsweise einen Vollweggleichrichter 99, gleichgerichtet. Die gleichgerichtete und ungeglättete Spannung wird über die Entkopplungsdiode V11 einem Wechselrichter 20 zugeführt. Dieser weist die Leistungsanschlüsse a,b,c und die Steueranschlüsse d und e auf. Zwischen den Leistungsanschlüssen a und b liegt die Reihenschaltung zweier über Steueranschlüsse steuerbarer Leistungs-Halbleiterschalter V3,V4, welche vorzugsweise Leistungstransistoren oder MOS-FETs sind (Leistungs-Halbleiterzweig). Zwischen den beiden Schaltern (am Mittelpunkt M1), d.h. dem oberen Schalter V3 und dem unteren Schalter V4 wird die Ausgangs-Wechselspannung u_{W}(t) über den Anschluß c an einen Lastkreis abgegeben.

Parallel zu dem vorgenannten Wechselrichter-Halbleiterzweig liegt eine Serienschaltung aus zwei im wesentlichen gleich großen Kapazitäten C9 und C10, der gemeinsame Anschluß ist als Mittelabgriff mit M2 bezeichnet. Der Lastkreis weist einen Leistungstransformator, mit zumindest einer Primärwicklung und einer Sekundärwicklung auf. An der Sekundärwicklung ist eine Niedervolt-Halogenlampe mit vorzugweise 12V Nennspannung fest oder einsteckbar/entnehmbar angeschlossen. Die Primärwicklung weist üblicherweise 220V auf, jedoch kann abhängig von dem eingesetzten Wechselrichtertyp 20 und der eingesetzten Schaltungsanordnung, wie Vollbrücke, Halbbrücke oder Halbbrücke mit kapazitivem Mittelpunkt eine entsprechend andere Primärspannung des Transformators gewählt werden. Parallel zu seinen Eingangklemmen liegt ein - den Leerlaufschutz begründender - Kondensator C7.

Die Primärwicklung des Leistungsübertragers Tr liegt mit ihrem einen Anschluß an dem Ausgangsanschluß c oder M1 des Wechselrichters 20, von welchem die Wechselspannung u_{W}(t) abgegeben wird. Der andere Anschluß der Primärwicklung liegt am Mittelpunkt M2 zwischen den Kondensatoren C9 und C10. Dieser Mittelpunktsabgriff bildet einen künstlichen Wechselspannungs-Mittelpunkt, so daß die Ausgangs-Wechselspannung u_{W}(t) des Wechselrichters 20 gegenüber diesem, im wesentlichen die halbe Versorgungsspannung u_{N}(t) aufweisenden, künstlichen Mittelpunkt bipolar wirkt.

Der dritte Leistungsanschluß des Wechselrichters 20, in Fig.1 mit b bezeichnet, wird über einen niederohmigen Strommeß-Widerstand R13 (Shunt) an den negativen Anschluß des Gleichrichters 99 geführt. Der Steuereingang d des Wechselrichter 20 ist ein Synchron-Eingang, er ist in Fig.1 direkt mit dem Ausgangsanschluß c, d.h. mit dem Mittelpunkt M1 des Halbleiterzweiges V3,V4, verbunden.

Der den Hochfrequenz-Wechselrichter 20 freigebende Steuereingang e ist nur prinzipiell dargestellt, er steuert die alternierende Schaltweise der beiden Leistungs-Halbleiterschalter V3 und V4 so an, daß nach einem einmaligen Impuls an Anschluß e der Wechselrichter selbsttätig (für selbstgeführte Wechselrichter) an und weiterschwingt.

Zwischen dem positiven Anschluß und dem negativen Anschluß des Gleichrichters 99 ist vor der Entkopplungsdiode V11, d.h. im Steuerschaltungsteil, die Reihenschaltung aus einem Dimmpotentiometer P, einem Festwiderstand R5, einem weiteren Festwiderstand R4 und einem Kondensator C1 (Synchronkondensator) angeschlossen. Eine Veränderung der Potentiometerstellung verändert die Zeitdauer zur Aufladung des Kondensators C1 oder verändert die Phasenlage der auf den Kondensator C1 liegenden Spannungsschwingung gegenüber der Ausgangsspannung u_{N}(t) des Gleichrichters 99. Auf gleiche Weise wie eine Anwendung der Ausgangsspannung des Gleichrichters 99 ist eine Steuerschaltungsteil-Führung über die Reihenschaltung aus P,R5,R4 und C1 ausgehend von der direkten Wechselspannung möglich. Ebenso kann P ohne R4,R5, welche zum Einstellen der Ansprechgrenze dienen, angwendet werden.

Parallel zu dem Synchronkondensator C1 liegt zum einen eine Reihenschaltung aus einem niederohmigen Widerstand R16 und einem Synchrontransistor V13 und zum andern ein selbsthaltendes Element, entweder ein Thyristor TH oder die Basis-Kollektor-Gegeneinanderschaltung eines PNP und NPN-Transistors V5,V7 zur diskreten Bildung eines Thyristorelementes. An dem Verbindungspunkt zwischen Festwiderstand R4 und Synchronkondensator C1 wird über ein Triggerelement, in Fig.1 eine Triggerdiode V6, der Starteingang oder Freigabeeingang e des Wechselrichters 20 angesteuert. Dies bedeutet, daß dann, wenn der Synchronkondensator C1 eine vorgegebene Spannung, die Triggerspannung oder Schaltschwelle u_{Z}, erreicht, der Steuereingang e einen Startimpuls erhält. Gleichzeitig wird der Kondensator C1 mittels V6 und der nachfolgend erläuterten Synchronisierdiode V2 entladen.

Ebenfalls an dem Verbindungspunkt R4/C1 ist die Anode einer Hochfrequenz-Synchronisierdiode V2 angeschlossen. Ihre Kathode ist mit dem Synchroneingang d des Wechselrichters 20, der dem Ausgangsanschluß c entspricht, verbunden. Sie erlaubt bei Betrieb des Wechselrichters, d.h. bei periodischem Schalten der Leistungs-Halbleiterschalter V3 und V4 jeweils dann eine Entladung des Synchronkondensators C1, wenn der untere Leistungs-Halbleiterschalter V4 eingeschaltet ist. Dies bewirkt eine laufende Entladung des Kondensators C1, wenn der Wechselrichter Hochfrequenz-Schwingungen u_{W}(t) abgibt, d.h. wenn die Ausgangs-Wechselspannung aktiv ist. Die Entladung erfolgt regelmäßig während einer Halbwelle der HF.

Der dem Synchronkondensator C1 parallelgeschaltete Thyristor TH oder die Transistorkombination V5,V7 schließt den Synchronkondensator C1 dann kurz, d.h. er entlädt ihn dann, wenn die an dem Strommeß-Widerstand R13 anliegende Spannung einen vorgebbaren oder vorgegebenen Grenzwert iₘₐₓ überschreitet. Dies wird durch eine Zenerdiode V1 bewirkt, die den Ausgangsanschluß b des Wechselrichters 20, welcher an den Meßwiderstand R13 angeschlossen ist, in Sperrichtung mit dem Gate-Anschluß des Thyristors TH verbindet. Ihre Sperrspannung bestimmt den Stromgrenzwert iₘₐₓ . Auch andere Komparatorschaltungen können - falls höhere Genauigkeit gewünscht ist - eingesetzt werden. Zur Glättung kurzzeitiger Störeinflüsse kann zwischen dem Gate-Anschluß des Thyristors TH und der Kathode dieses Thyristors eine Entstörkapazität C2 geschaltet werden.

Die an R13 abfallende Spannung ist stromproportional, sie entspricht jeweils dem Laststrom i_{L}(t), welcher in der Primärwicklung des Leistungsübertragers Tr fließt, wenn der untere Leistungs-Halbleiterschalter V4 eingeschaltet ist. Dies bildet eine Stromhalbwellenmessung, die aufgrund ihres Bezugspotentials ohne weitere Übersetzungs- oder Übertragungsglieder besonders vorteilhaft zur Überstromüberwachung einsetzbar ist.

Parallel zu der Zenerdiode V1, welche den absoluten Grenzwert des erlaubten Wechselrichter-Ausgangsstromes i_{L}(t) vorgibt, ist ein NTC-Widerstand R6 geschaltet. Dieser Widerstand wird thermisch mit dem Transformator Tr, und dort vorteilhaft mit der Sekundärwicklung gekoppelt. Parallel zu dem Kondensator C2 liegt ein Widerstand R1, der gemeinsam mit dem Temperaturerfassungs-NTC R6 einen Spannungsteiler derart bildet, daß die an Widerstand R13 abfallende stromproportionale Spannung dann den Thyristor TH ansteuert, wenn der Widerstand R6 in seinem Widerstandswert sinkt. Dies ist bei steigender Temperatur Θ der Fall. Gleichzeitig mit der Temperaturabhängigkeit wird hierbei eine Stromabhängigkeit bewirkt. Eine sehr geringe Temperatur Θ der Sekundärwicklung läßt höhere Ströme zu, bevor abgeschaltet wird, eine erhöhte Temperatur der Sekundärwicklung des Übertragers Tr läßt diese Temperaturüberwachung früher ansprechen. In jedem Fall ist der Stromgrenzwert durch die Durchbruchspannung der Zenerdiode V1 gegeben, wenn der an Widerstand R13 abfallende Spannungswert größer als die Sperrspannung der Zenerdiode +0.6V (Flußspannung der Gate-Kathoden-Strecke) wird, wird der Thyristor TH gezündet. Als Maximalwert Θₘₐₓ für die Temperatur des Trenntrafos findet so eine Funktion von i_{L} Anwendung. Auch andere Temperaturfühler sind anstelle des NTC einsetzbar. Neben der Entladung der Synchronkapazität C1 kann der Thyristor TH auch den in Fig.2 später erläuterten Steuerübertrager Ü vorteilhaft derart kurzschliessen, daß eine selbsterregte Weiterschwingung des selbstgeführten Wechselrichters 20 verhindert oder unterbrochen wird.

Zwischen den Widerständen R5 und R4 wird eine der gleichgerichteten Versorgungsspannung u_{N}(t) proportionale Spannung über einen Widerstand R14 einem Nullspannungsdetektor bestehend aus R15,R17,R18, sowie V12,V13 und R16 zugeführt. Der Nullspannunsdetektor arbeitet derart, daß bei geringer Spannung zwischen den Widerständen R5 und R4, d.h. bei Beginn und Ende der Halbwellen der gleichgerichteten Versorgungsspannung u_{N}(t), der Synchrontransistor V13 durchgeschaltet wird. Er entlädt über seinen Kollektorwiderstand R16, auf gleiche oder ähnliche Weise wie der Thyristor TH, die Synchronkapazität C1. Eine solche Entladung findet jeweils dann statt, wenn die Spannung zwischen R5 und R4 unter einen vorgebbaren Minimalwert (Synchronschwelle) sinkt.

Der Synchrontransistor V13 wird wieder sperrend, wenn die Synchronschwelle - und das geschieht periodisch - überschritten wird. Sodann wird eine zeitkontinuierlich Aufladung des Synchronkondensators C1 über das Dimmpoti P und gegebenenfalls über die Reihenschaltung der Widerstände R5 und R4 erlaubt. Je größer der Widerstand des Dimmpotis P ist, desto langsamer steigt die Spannung an C1. Entsprechend (zeitlich) später wird die Spannungsschwelle des Diac V6 erreicht und entsprechend später wird die selbsthaltende Hochfrequenz-Schwingung des (selbstgeführten) Wechselrichters 20 über den Freigabeingang e initiiert. Je später der Initiierungszeitpunkt t_{Z} oder t₁ oder t₂, (siehe Fig.3, 4) liegt, desto geringer wird die der Niedervolt-Halogenleuchte NV zugeführte Leistung. Auf diese Weise wird eine Helligkeitsregelung durch Zündwinkelverschiebung (Schwingungs-Einsatzzeitpunkt) erreicht.

Gleichwertig zu der Entladung der Synchronkapazität C1 über die Reihenschaltung aus Widerstand R16 und Synchrontransistor V13 ist eine Schaltungsanordnung einsetzbar, die den Thyristor TH dann ansteuert, wenn die Spannung am Ausgang des Gleichrichters 99 "nahe Null" liegt. Aufgrund des Selbstverlöschens des Thyristors TH bei Unterschreitung seines Haltestroms, kann so die Kapazität C1 auch in/nahe dem "Nulldurchgang" der gleichgerichteten ungeglätteten Versorgungsspannung u_{N}(t) entladen werden, ohne daß die Selbsthaltung des Thyristors TH störend wirkt (Eigenrücksetzen).

Eine solche Ansteuerung wäre beispielsweise durch eine ODER Verknüpfung von Steuersignalen des Thyristors TH erzielbar, zum einen würde das Gate des Thyristors durch die Temperatur- und Überstromüberwachung (Θₘₐₓ,iₘₐₓ) angesteuert, zum anderen über eine Schmitt-Trigger ähnliche Schaltung, die dem Gate dann ein Steuersignal zuführt, wenn die Halbwellen-Versorgungsspannung u_{N}(t) unter einer vorgegebenen Spannungsschwelle u_{H} liegt, welche sich nahe Null befindet (ca.5..30V).

Der Widerstand R14 (Speisewiderstand), welcher die Synchronschaltung mit den Transistoren V12 und V13 steuert, speist sowohl die Reihenschaltung aus Widerstand R17 und R15, welcher letzterer an den negativen Anschluß des Gleichrichters 99 angeschlossen ist. Dieser Anschluß bildet den Bezugspunkt der Schaltungsanordnung gemäß Fig.1, dies ist jedoch nur beispielhaft zu verstehen. Auf gleiche Weise kann die gesamte Schaltungsanordnung mit Wechselrichter derart invertiert werden, daß die positive Versorgungsspannung, d.h. der positive Anschluß des Gleichrichters 99 als Bezugspunkt vorgesehen ist.

Zwischen den Widerständen R15 und R17 wird die Basis des Transistors V12 angesteuert, dessen Emitter an dem Bezugspunkt und dessen Kollektor über einen Widerstand R18 an den vorgenannten Speisewiderstand R14 angeschlossen ist. Der Kollektor des Transistors V12 ist an der Basis des als Emitterfolgers geschalteten Synchrontransistors V13 angeschlossen. Die Wirkung der Schaltung ist nun die folgende, sobald die von R14 zugeführte Spannung unter eine vorgegebene Schwelle sinkt, wird - aufgrund des Spannungsteilers R17/R15 - der Transistor V12 in den sperrenden Zustand gesteuert. Sein Kollektorwiderstand R18 steuert kurzzeitig die Basis des Synchrontransistors V13 an, derart, daß dieser über R16 den Synchronkondensator C1 entladen kann. Sobald die von R14 zugeführte Spannung wieder steigt, wird der Transistor V12 zwischen Kollektor und Emitter leitend, der Synchrontransistor V13 sperrt hierauf und gibt die Ladephase des Synchronkondensators C1 frei. Eine entsprechende Veränderung des (oberen) Anschlußpunktes des Speisewiderstandes R14 kann gemäß wirksamen der Spannungshöhe von u_{N}(t) erfolgen.

Die Synchronschwelle ist nun bei Dimensionierung der Widerstände R15,R17 beliebig niedrig zu legen, sie ist vorgegeben durch die notwendige Entladezeit des Kondensators C1. Wird der Widerstand R16 größer gewählt, dann führt die Einschaltung des Synchrontransistors V13 nur zur Entladung des Synchronkondensators C1, nicht jedoch zu der Hochfrequenz-Schwingungs-Unterbrechung, welche durch das Zünden des Thyristors TH ausgelöst wird. Eine Kopplung der Nullspannungserfassung auf den Gate-Anschluß des Thyristors führt hingegen auf ein Entladen des Synchronkondensators C1 bei gleichzeitiger Unterbrechung der ohnehin nur noch geringfügigen Hochfrequenz-Schwingung des Wechselrichters 20.

Auch ein Komparator (Operationsverstärker) kann Einsatz finden für die "Nullfassung".

Anhand Fig. 2 wird im folgenden kurz die Wirkungsweise eines Ansteuerübertragers Ü erläutert. Er bewirkt eine selbsthaltende Schwingung (Schwingungsbündel,-burst) des Wechselrichters 20 (selbstgeführter Wechselrichter), wenn seine Primärwicklung T1A in den Lastkreis, d.h. in Serie zu der Primärwicklung des Leistungsübertragers Tr geschaltet ist.

Der Übertrager Ü weist für das Ausführungsbeispiel drei Sekundärwicklungen T1B,T1C und T1D auf. Die Wicklung T1B und T1D steuern gegensinnig die steuerbaren Leistungs-Halbleiterschalter V3 und V4 an. Bei positivem Laststrom wird der untere Leistungs-Halbleiterschalter V4 angesteuert. Dies ist auch der anfängliche Schaltzustand, wenn der Diac V6 einen Startimpuls an den Freigabeeingang e des Wechselrichters 20 legt und C1 über V4 und V6/V2 entladen wird. Die Entladung ist vorteilhaft zur Ausschaltung weiterer "Start"-Impulse, die während einer Schwingung (HF) diese parasitär zum Erliegen bringen könnten.

In Fig.2 ist dieser Starteingang e detailierter dargestellt, er steuert die dritte Sekundärwicklung T1C gleichsinnig mit der zweiten Sekundärwicklung T1B an, welche den unteren Leistungs-Halbleiterschalter V4 ansteuert. Auf diese Weise wird bei Zünden des Diacs V6, d.h. dann, wenn die Steuerspannung u_{St}(t), welche an dem Synchronkondensator C1 anliegt, die Triggerschwelle u_{Z} des Diacs V6 überschreitet, die Serienschaltung aus Sekundärwicklung T1C und T1B des Steuerübertragers Ü mit positivem Strom versorgt.Der untere Leistungs-Halbleiterschalter V4 leitet (wird leitend gesteuert), die Hochfrequenzschwingung (Paket,Bündel) wird initiiert.

Andererseits wird (oder kann) über eine Abschaltdiode V9, welche mit ihrer Anode an dem (An)steueranschluß e des Wechselrichters 20 angeschlossen ist und deren Kathode mit dem Synchronkondensator C1 verbunden ist, die Reihenschaltung aus Sekundärwicklung T1C und T1B durch Zünden des Thyristors TH kurzgeschlossen (werden). Auf diese Weise wird eine selbstgeführte Schwingung über den Ansteuerübertrager Ü schlagartig unterbunden. Ein eventuell sich noch in den Induktivitäten des Lastkreises befindlicher Strom wird über Freilaufdioden entladen/abgeleitet, welche - mit ihrer Kathode zum positiven Potential gerichtet - jeweils zu den Leistungs-Halbleiterschaltern V3 und V4 parallelgeschaltet sind.

Fig.3 zeigt nun ein Diagramm der Aus- und Eingangsgrößen der Schaltungsanordnung gem. Fig.1. Zum einen ist die (einhüllende) gleichgerichtete Netzspannung u_{N}(t) anhand der gestrichelten Linie erkennbar. Aufgrund einer bestimmten Stellung des Dimmpotentiometers P wird ein Zündverzug (Zündwinkel) von α1=36° vorgegeben. Dies bedeutet, daß die Hochfrequenz-Schwingung, welche durch die Netzspannungs-Halbwelle u_{N}(t) (zu 100%) moduliert ist, erst 36° nach dem Beginn der Halbwelle (natürlicher Einsatz- oder Zündzeitpunkt) einsetzt.

Die Hochfrequenzschwingung ist beim selbstgeführten Wechselrichter bestimmt durch die Dimensionierung des Ansteuerübertragers Ü und die Kapazitäten C9 und C10, sowie die Basisspannungen der Leistungs-Halbleiterschalter V3 und V4. Bei einem fremdgeführten Wechselrichter wird die Frequenz durch einen VCO oder einen Zähler (extern) vorgegeben.

Eine Verzögerung des Hochfrequenz-Schwingungseinsatz-Zeitpunktes (in Fig.3 mit t1 bezeichnet), bewirkt eine Senkung der an die NV-Lampe abgegebenen Wirkleistung. Gleichzeitig wird aufgrund der Hochfrequenz-Schwingung eine reduzierte magnetische Baugröße des Leistungsübertragers Tr erzielt. Die mit der einhüllenden Netzspannungshalbwelle von u_{N}(t) modulierte Hochfrequenz-Schwingung findet ihr natürliches Ende im Nulldurchgang der Netzspannung oder am Ende (α=180°) der Halbwelle. Wird der Zündverzug α weiter erhöht, dies zeigt die Fig.4, so wird der Hochfrequenz-Laststrom i_{L}(t), welcher von der Ausgangs-Wechselspannung u_{W}(t) des Wechselrichters 20 bewirkt ist, noch später initiiert. Es verbleiben jediglich einige Perioden der Hochfrequenzs-Spannung/strom, welche ihr selbstlöschendes Ende im Nulldurchgang der führenden/speisenden Netzspannungs-Halbwelle u_{N}(t) findet.

Wird gem. Fig.5 längere Zeit, d.h. eine oder mehrere Netzspannungs-Halbwellen lang keine Zündung oder Initiierung der Hochfrequenz durchgeführt, dies bedeutet α=180°, so lädt sich die Kapazität C1 parasitär und pulsweise/halbwellenweise auf. Dies wird im unteren Diagramm der Fig.5 dargestellt. Entsprechend der Spannungshalbwellen u_{N}(t) wird - ein hoher eingestellter Wert für das Dimmpotentiometer P vorausgesetzt - die von der Triggerdiode V6 vorgegebene Zündspannungsschwelle u_{Z} innerhalb einer Netzspannungshalbwelle nicht erreicht. Folglich bleibt die Hochfrequenzsschwingung für eine ohne mehrere Netzspannungsperioden aus. Die Hochfrequenzsynchronisation über die Entladediode V2, welche bei Einschalten des Wechselrichters regelmäßig für eine hochfrequenzperiodische Entladung der Synchronkapazität C1 sorgt, bleibt unwirksam. Die Anfangsbedingung des Tiefpasses PT1 (bestehend aus Reihenschaltung P, R5 und R4 und Synchronkapazität C1) ist ohne HF-Schwingung für den jeweiligen Beginn einer Netzspannungs-Halbwelle u_{N}(t) unterschiedlich. In einer beliebigen Halbwelle erreicht die Steuerspannung u_{St} der Synchronkapazität C1 schließlich die Zündspannung u_{Z} der Triggerdiode V6 und es wird, wie im rechten Teil der Fig.5 dargestellt, eine parasitäre und unerwünschte Hochfrequenz-Schwingung des Wechselrichters 20 initiiert. Dies findet zum Zeitpunkt t_{Z} statt. Dieser entspricht dem parasitären Zündverzug αₓ, welcher aufgrund parasitärer Ladung (Aufladung) der Synchronkapazität C1 erfolgte.

Dies bewirkt - obwohl das Dimmpoti den ausgeschalten Zustand anzeigt - ein plötzliches Aufleuchten der NV-Lampe, es kann auch zu einer parasitären Helligkeitsoszillation oder einer konstanten reduzierten (aber nicht eingestellten) Helligkeit der genannten Lampe kommen. Dies ist unerwünscht.

Aus dem genannten Grund, d.h. bei fehlender Hochfrequenz-Synchronisation durch die Ausgangs-Wechselspannung u_{W} mit Wirkung auf die Synchronkapazität C1 über die Entladediode V2 - die im abgeschalteten Zustand unwirksam ist - wird über V13 und R16 eine zusätzliche Niederfrequenz-Synchronisation eingesetzt. Diese ist periodisch mit dem "Nulldurchgang" der gleichgerichteten Versorgungsspannung u_{N}(t).

Die Wirkung der Niederfrequenz (ca.50Hz oder 60Hz) Synchronisation bewirkt im unteren Diagramm der Fig.5 ein jeweiliges Rücksetzen oder Entladen der Synchronkapazität C1, derart, daß zu jedem Beginn (α=0) einer Versorgungsspannungs-Halbwelle u_{N}(t) die Synchronspannung u_{St} der Synchronkapazität C1 sich jeweils auf definiertem, insbesonderem entladenem, Anfangszustand befindet. Der Zündwinkel α kann nun zwischen den Werten 0≦α≦180° ohne parasitäre Beeinflussung verschoben werden, auch tritt bei einem länger währenden Zündwinkel von α=180° keine parasitäre Initiierung der Hochfrequenz-Schwingungen ein.

Die anhand der Fig.1 und den zugehörigen Zeitdiagramm der Fig.3 bis 5 erläuterten Betriebs- und Wirkungsweise des Niedervol-Halogendimmers ist jedoch nicht auf dieses Ausführungsbeispiel beschränkt. Neben einem selbstgeführten Wechselrichter kann ebenso ein fremdgeführter Wechselrichter eingesetzt werden. Insbesondere dann ist es vorteilhaft die eingesetzte Triggerdiode V6 und das den Zündverzug α vorgebende Verzögerungsglied PT1 (bestehend aus Dimmpoti P, Widerstand R5, R4 und Synchronkondensator C1) durch einen Zähler oder ein analoges oder digitales Laufzeitglied zu ersetzen. Die Zündbedingung würde hierbei durch Erreichen eines vorgegebenen oder vorgebbaren Zählerstandes oder durch Herabzählen auf den Wert Null definiert. Variieren des Zähler-Anfangsstandes oder der Zählfrequnz erlauben Einstellung des Zündwinkels α.

Auf gleiche Weise ist die Niederfreqeuenz-Synchronisation durch R16 und Synchrontransistor V13 mittels Rücksetzen oder Setzen des Zählers zu bewirken. Eine Intitiierung, d.h. eine Freigabe des selbstgeführten oder fremdgeführten Wechselrichters 20 wird dann über einen Freigabeeingang e erfolgen, der eine Schwingung dann erlaubt, wenn an ihm ein aktives logisches Signal anliegt. Ein passives logisches Signal würde zum Abschalten der Leistungs-Halbleiterschalter und somit zum Abreißen/Abbruch der Hochfrequenzsschwingung führen. Die Hochfrequenzsschwingung ist bei einem selbstgeführten Wechselrichter frei vorgebbar und veränderbar.

Auf gleiche Weise wie die Niederfrequenz-Synchronisation des Synchronkondensators C1 erfolgt, erfolgt bei Einsatz eines Zählers in Digitalversion das Rücksetzen dieses Zählers niederfrequenzmäßig . Auf gleiche Weise, d.h. durch Rücksetzen oder Setzen des Zählers wird die bisher durch die Entladediode V2 bewirkte Hochfrequenz-Synchronisation - bei Einschalten der Wechselrichter-Schwingung - bewirkt. Da das Freigabesignal an Freigabeeingang e jedoch statisch ist, kann auch dieses Signal zur laufenden Blockierung oder zum Setzen/Rücksetzen des dann eingesetzten Zählers herangezogen werden.

## Patentansprüche

1. Helligkeitssteuer-Schaltungsanordnung, insbesondere für einen Lastkreis mit einer Niedervolt-Halogenleuchte (NV) und einem dieser vorgeschalteten Leistungstransformator (Tr) oder Leistungsübertrager, zur Variation der aus einer Wechselspannungs-Versorgung entnommenen und an einen Lastkreis (Tr, NV) abgegebenen Wirkleistung,
mit einem Hochfrequenz-Wechselspannungsgenerator (20), der eine Ausgangs-Wechselspannung (u_{W}) aus einer unwesentlich geglätteten oder ungeglätteten, gleichgerichteten Niederfrequenz-Zwischenkreisspannung (u_{N}) an den Lastkreis (Tr, NV) abgibt,
mit einem Tiefpaß, bestehend aus einem variierbaren Widerstand (R4, R5, P) und einer Synchronkapazität (C1) in Serienschaltung,
und mit einer ersten Synchronschaltung (V2, V6), die eingangsseitig mit der Synchronkapazität (C1) des Tiefpasses und ausgangsseitig mit dem Hochfrequenz-Wechselspannunggenerator (20) verbunden ist, und die infolge eines eingangsseitigen Signals den Wechselspannungsgenerator (20) aktiviert,
**gekennzeichnet durch**
eine zweite Synchronschaltung (V5, V7, TH; R16, V13), die ausgangsseitig mit der Synchronkapazität (C1) des Tiefpasses (PT1) verbunden und eingangsseitig von der gleichgerichteten Zwischenkreis-Spannung (u_{N}) oder der Wechselspannungs-Versorgung geführt ist,
womit die Synchronkapazität (C1) zur Schaffung gleicher Anfangsbedingungen vor jedem Beginn einer Niederfrequenz-Halbwelle der Versorgungsspannung (u_{N}) bzw. vor jedem Beginn einer Aufladephase der Synchronkapazität (C1) im wesentlichen entladen wird, oder
womit die Synchronkapazität (C1) über eine eigenrücksetzende Kippschaltung entladen wird, wenn die ungeglättete Zwischenkreisspannung (u_{N}) unter eine Synchronschwelle (u_{H}) sinkt.

2. Schaltungsanordnung nach Anspruch 1,
*dadurch gekennzeichnet,*
daß der Wechselspannungsgenerator (20) als Wechselrichter in Halbbrückenschaltung ausgeführt ist und die unipolare Ausgangs-Wechselspannung (u_{W}) von dem Mittelabgriff (M1) zweier in Serie geschalteter (Halbleiterzweig) Leistungs-Halbleiter (V3,V4) an den ersten Eingangsanschluß des Transformators (Tr) abgegeben wird,
daß der zweite Eingangsanschluß des Transformators (Tr) an einem weiteren Mittelabgriff (M2) einer Serienschaltung (Kapazitätszweig) zweier Kapazitäten (C9,C10) anschließbar ist und
daß sowohl der Kapazitätszweig (C9,C10) als auch der Halbleiterzweig von der ungeglätteten Zwischenkreis-Gleichspannung (u_{N}) versorgt ist und der weitere Mittelabgriff (M2) wechselstrommäßig im wesentlichen die halbe Zwischenkreis-Gleichspannung (u_{N}/2) aufweist.

3. Schaltungsanordnung nach Anspruch 1,
*dadurch gekennzeichnet,*
daß der Wechselspannungsgenerator (20) in Vollbrückschaltung ausgeführt ist, wobei zwei parallele Zweige vorgesehen sind, die jeder eine Serienschaltung aus oberem (V3) und unterem (V4) Leistungs-Halbleiterschalter aufweisen und
daß der Leistungstransformator (Tr) zwischen den jeweiligen Mittelabgriffen der beiden Zweige (M1,M2) angeschlossen ist und beide Zweige selbst parallel mit der gleichgerichteten und ungeglätteten Zwischenkreisspannung (u_{N}) verbunden sind.

4. Schaltungsanordnung nach einem der vorstehenden Ansprüche,
*dadurch gekennzeichnet,*
daß der Wechselspannungsgenerator (20) oder Wechselrichter-Halbleiterzweig (V3,V4) als selbstgeführter Wechselrichter mit magnetischer (Ü,T1A,T1B,T1C,T1D) oder optischer Kopplung zwischen dem in der Primärwicklung des Leistungstransformators (Tr) fließenden Laststrom (i_{L}) und dem Wechselrichter (20,V3,V4) ausgebildet ist.

5. Schaltungsanordnung nach Anspruch 1,
**dadurch gekennzeichnet,**
daß die zweite Synchronschaltung (V5, V7, TH; R16, V13) jeweils dann die Synchronkapazität (C1) des Tiefpasses (PT1) entlädt, wenn ihr eingangsseitiges Führungssignal (u_{N}) unter die vorgebbare Synchronschwelle (u_{H}) sinkt, und daß die zweite Synchronschaltung (V5, V7, TH; R16,V13) dann, wenn ihr eingangsseitiges Führungssignal (u_{N}) größer als die Synchronschwelle (u_{H}) ist, die Synchronkapazität (C1) des Tiefpasses (PT1) freigibt.

6. Schaltungsanordnung nach Anspruch 2 oder 4,
*dadurch gekennzeichnet,*
daß in Serie zu der Parallelschaltung aus dem Halbleiterzweig (V3,V4) und Kapazitätszweig (C9,C10) eine den Lastteil von dem Steuerteil der Helligkeitssteuer-Schaltungsanordnung entkoppelndes Element, vorzugsweise eine Diode in Flußrichtung (V11), geschaltet ist.

7. Schaltungsanordnung nach Anspruch 1 und/oder Anspruch 5,
**dadurch gekennzeichnet,**
daß die zweite Synchronschaltung (V5, V7, TH; R16, V13) eine Reihenschaltung aus einem Entladewiderstand (R16) und einem steuerbaren Halbleiter oder -Schaltkreis (V13) aufweist, oder
daß die zweite Synchronschaltung (V5, V7, TH; R16, V13) als eigenrücksetzende Kippschaltung einen Thryristor aufweist.

8. Schaltungsanordnung nach Anspruch 1 oder Anspruch 4,
*dadurch gekennzeichnet,*
daß eine eigenrücksetzende Kippschaltung, insbesondere ein Thyristor (TH), den Wechselspannungsgenerator/Wechselrichter (20) dann für zumindest die verbleibende Netzspannungs-Halbwelle (u_{N}) schlagartig sperrt und/oder die Synchronkapazität (C1) entlädt bzw. überbrückt, wenn der hochfrequente Laststrom (i_{L}) einen vorgegebenen Grenzwert (iₘₐₓ) überschreitet.

9. Schaltungsanordnung nach Anspruch 1, Anspruch 4 oder Anspruch 8,
*dadurch gekennzeichnet,*
daß ein Temperaturerfassungselement (R6,NTC) in dem Leistungstransformator (TR), insbesondere in unmittelbarer thermischer Nachbarschaft zu seine(r)(n) die NV-Lampe(n) speisenden Sekundärwicklung(en), angeordnet ist und
daß eine eigenrücksetzbare Kippschaltung, insbesondere ein/der Thyristor (TH) den Wechselspannungsgenerator/Wechselrichter (20) dann für zumindest die verbleibende Niederfrequenz-Netzspannungshalbwelle (u_{N}) schlagartig sperrt und/oder die Synchronkapazität (C1) entlädt bzw. überbrückt, wenn die gemessene Temperatur (Θ) einen vorgegebenen Grenzwert (Θₘₐₓ) überschreitet,
wobei insbesondere die vorgenannte Temperaturbegrenzung (Θₘₐₓ) lastromabhängig derart wirkt, daß bei reduzierter Temperatur (Θ) des Leistungstranformators (Tr) ein erhöhter Strommaximalwert und bei erhöhter Temperatur ein entsprechend reduzierter Strommaximalwert des hochfrequenten Laststroms (i_{L}) zugelassen wird und der Maximalwert jeweils unterhalb des/eines Grenzwertes (iₘₐₓ) liegt.

10. Schaltungsanordnung nach Anspruch 1 oder 4,
**dadurch gekennzeichnet,**
daß eine periodische Entladung der Synchronkapazität (C1) über eine mit der Kathode zur Ausgangs-Wechselspannung (u_{W}, M1) gerichtete Diode (V2) jeweils dann erfolgt, wenn der jeweils eine (V4) der beiden Halbleiterschalter (V3, V4) des Wechselspannungsgenerators/Wechselrichters (20) leitend gesteuert wird.

11. Schaltungsanordnung nach Anspruch 1 oder Anspruch 4,
dadurch gekennzeichnet,
daß eine Lastkapazität (C7) der Primär- oder Sekundärwicklung des Leistungstransformators (Tr) parallelgeschaltet ist.

12. Schaltungsanordnung nach einem dem vorherstehenden Ansprüche,
*dadurch gekennzeichnet,*
daß der Hochfrequenz-Schwingungseinsatzzeitpunkt (t_{z},α1+α2) durch Vergleich (V₆) eines vorgegebenen oder vorgebbaren Schwellenwerts (u_{Z}) mit einem zeitkontinuierlich variierbar (R₄,R₅,P) anwachsenden Steuersignal (u_{St}) innerhalb einer Halbwelle der Zwischenkreisspannung (u_{N}) verschiebbar ist, wobei eine zeitliche Verzögerung des HF-Schwingungseinsatzzeitpunktes (t_{z},α1,α2) ausgehend vom Beginn (α=0°) der Halbwelle zum Ende (α=180°) der Halbwelle, einer Reduzierung der Lampenhelligkeit (NV), ausgehend von der maximalen Helligkeit bis auf Null, entspricht.

13. Schaltungsanordnung nach einem der vorherstehenden Ansprüche,
*dadurch gekennzeichnet,*
daß die über ein Triggerelement, wie eine Triggerdiode (V6), ausgelöste Hochfrequenzschwingungen des Wechselspannungsgenerators/ Wechselrichters (20) bis zum Ende einer jeweiligen Zwischenkreisspannungs-Halbwelle (u_{N}) eigenstabil sind, es sei denn, eine Schutzschaltungsanordnung, wie Übertemperaturüberwachung oder Maximalstromüberwachung, wird während der Hochfrequenzschwingungen aktiviert.

14. Verfahren zur Variation der Leuchstärke mindestens einer NV-Halogenleuchte/lampe, das Hochfrequenz-Schwingungspakete (u_{W}) verwendet, die über einen Leistungstransformator (Tr) der Niedervolt-Halogenleuchte (NV) periodisch zuführbar sind, wobei der Schwingungs-Einsatzzeitpunkt (T_{Z}, α1, α2) abhängig von einem Helligkeits-Steuersignal (U_{St}, U_{Z}) oder einer entsprechenden Widerstandsvariation (P) innerhalb einer Halbwellenzeitdauer einer pulsierenden Versorgungsspannung (u_{N}) verschiebbar (α) ist, wobei bei Betrieb eine hochfrequenzperiodische (V2, V6) Synchronisation des Schwingungsvorganges erfolgt,
**dadurch gekennzeichnet,**
daß zusätzlich eine niederfrequenzperiodische Synchronisation (R16, V13) oder Rücksetzung/Initial isierung des den Schwingungs-Einsatzzeitpunkt (T_{Z}, α1, α2) bestimmenden Systemvorganges, insbesondere die zeitabhängige Aufladung eines kapazitiven Elements (C1) erfolgt, so daß zu Beginn jeder Halbwelle der pulsierenden Versorgungsspannung (u_{N}) gleiche Anfangsbedingungen geschaffen werden.

15. Verfahren nach Anspruch 14,
*dadurch gekennzeichnet,*
daß ein am verschiebbaren Schwingungs-Einsatzzeitpunkt (t_{Z},α1,α2) initiiertes Hochfrequenz-Schwingungspaket (u_{W}) mit der treibenden ungeglätteten Versorgungsspannung (u_{N}) aufklingt und/oder abklingt, abhängig von dem Vorzeichen der Steigung der Versorgungsspannungshalbwellen (u_{N}) und
daß eine schlagartige Sperrung der Schwingungen des Schwingungspaketes (u_{W},i_{L}) dann eintritt, wenn die Temperatur des Leistungstransformators (Tr) und/oder Amplitude des Hochfrequenz-Schwingungsstromes (i_{L}) einen vorgegebenen Grenzwert (iₘₐₓ,Θₘₐₓ) überschreitet.

16. Anwendung der Helligkeitssteuer-Schaltungsanordnung gemäß Anspruch 1 in einem fremdgeführten Wechselrichter als Wechselspannungsgenerator (20) mit externer freier Vorgabe der Oszillatorfrequenz bei der Helligkeitsvariation einer Niedervolt-Halogenlampe (NV).

## Claims

1. Brightness control circuitry arrangement, in particular for a load circuit having a low voltage halogen light (NV) and a power transformer (Tr) or power converter connected upstream of the light, for varying the effective power taken from an a.c. supply and delivered to a load circuit (Tr, NV),
having a high frequency a.c. voltage generator (20), which supplies an output a.c. voltage (u_{W}), from a non-smoothed or not substantially smoothed rectified low frequency intermediate circuit voltage (u_{N}), to the load circuit (Tr, NV),
having a low-pass member consisting of a variable resistance (R4, R5, P) and a synchronization capacitance (C1) in series connection,
and having a first synchronization circuit (V2, V6) which is connected on the input side with the synchronization capacitance (C1) of the low-pass member and on the output side with the high frequency a.c. voltage generator (20), and which activates the a.c. voltage generator (20) in response to a signal at the input side,
characterized by,
a second synchronization circuit (V5, V7, TH; R16, V13) which is connected at the output side with the synchronization capacitance (C1) of the low-pass member (PT1) and is controlled on the input side by the rectified intermediate circuit voltage (u_{N}) or the a.c. voltage supply,
whereby the synchronization capacitance (C1) is substantially discharged before each start of a low frequency half-wave of the supply voltage (u_{N}) or before each start of a charging phase of the synchronization capacitance (C1), to provide uniform initial conditions, or
whereby the synchronization capacitance (C1) is discharged via a self-resetting switching circuit when the non-smoothed intermediate circuit voltage (u_{N}) sinks below a synchronization threshold (u_{H}).

2. Circuitry arrangement according to claim 1,
characterized in that,
the a.c. voltage generator (20) is provided as an inverter with a half-bridge circuit arrangement and the unipolar output a.c. voltage (u_{W}) is supplied from the middle tap (M1) of two power semiconductors (V3, V4) connected in series (semiconductor branch) to the first input terminal of the transformer (Tr),
in that the second input terminal of the transformer (Tr) can be connected to a further middle tap (M2) of a series connection (capacitance branch) of two capacitances (C9, C10),
and in that both the capacitance branch (C9, C10) and the semiconductor branch are supplied by the non-smoothed intermediate circuit d.c. voltage (u_{N}) and the further middle tap (M2) exhibits, in terms of a.c. current, substantially half the intermediate circuit d.c. voltage (u_{N}/2).

3. Circuitry arrangement according to claim 1,
characterized in that,
the a.c. voltage generator (20) is provided as a full-bridge circuit, two parallel branches being provided each having a series circuit of upper (V3) and lower (V4) power semiconductor switches,
and in that the power transformer (Tr) is connected between the respective middle taps of the two branches (M1, M2) and the two branches themselves are connected in parallel with the rectified and non-smoothed intermediate circuit voltage (u_{N}).

4. Circuitry arrangement according to any preceding claim,
characterized in that,
the a.c. voltage generator (20) or the inverter semiconductor branch (V3, V4) is formed as self-commutated inverter having magnetic (Ü, T1A, T1B, T1C, T1D) or optical coupling between the load current (i_{L}) flowing in the primary winding of the power transformer (Tr) and the inverter (20, V3, V4).

5. Circuitry arrangement according to claim 1,
characterized in that,
the second synchronization circuit (V5, V7, TH; R16, V13) discharges the synchronization capacitance (C1) of the low-pass member (PT1) in each case when its input side control signal (u_{N}) sinks below the predeterminable synchronization threshold (u_{H}),
and in that the second synchronization circuit (V5, V7, TH; R16, V13) releases the synchronization capacitance (C1) of the low-pass member (PT1) when its input side control signal (u_{N}) is greater than the synchronization threshold (U_{H}).

6. Circuitry arrangement according to claim 2 or 4,
characterized in that,
in series with the parallel circuit of the semiconductor branch (V3, V4) and the capacitance branch (C9, C10) there is connected an element, preferably a diode in the flow direction (V11), which decouples the load part from the control part of the brightness control circuitry arrangement.

7. Circuitry arrangement according to claim 1 and/or claim 5,
characterized in that,
the second synchronization circuit (V5, V7, TH; R16, V13) has a series circuit of a discharge resistance (R16) and a controllable semiconductor or switching circuit (V13),
or in that the second synchronization circuit (V5, V7, TH; R16, V13) has a thyristor as self-resetting switching circuit.

8. Circuitry arrangement according to claim 1 or claim 4,
characterized in that,
a self-resetting switching circuit, in particular a thyristor (TH), abruptly blocks the a.c. voltage generator/inverter (20) and/or discharges or bridges the synchronization capacitance (C1) for at least the remaining mains voltage half-wave (u_{N}), when the high frequency load current (i_{L}) exceeds a predetermined limit value (iₘₐₓ).

9. Circuitry arrangement according to claim 1, claim 4 or claim 8,
characterized in that,
a temperature detection element (R6, NTC) is arranged in the power transformer (Tr), in particular in direct thermal proximity to the secondary winding or windings of the transformer which feed the low-voltage lamp or lamps,
and in that a self-resettable switching circuit, in particular the or a thyristor (TH), abruptly blocks the a.c. voltage generator/inverter (20) and/or discharges or bridges the synchronization capacitance (C1) for at least the remaining low frequency mains voltage half-wave (u_{N}), when the measured temperature (ϑ) exceeds a predetermined limit value (ϑₘₐₓ),
whereby in particular the above-mentioned temperature limitation (ϑₘₐₓ) has effect in dependence upon load current in such a manner that with reduced temperature (ϑ) of the power transformer (Tr) an increased current maximum value is permitted and with increased temperature a correspondingly reduced current maximum value of the high frequency load current (i_{L}) is permitted, and in each case the maximum value lies below the or a limit value (iₘₐₓ).

10. Circuitry arrangement according to claim 1 or 4,
characterized in that,
a periodical discharge of the synchronization capacitance (C1) via a diode (V2) having the cathode directed towards the output a.c. voltage (u_{W}, M1) occurs in each case when the respective one (V4) of the two semiconductor switches (V3, V4) of the a.c. voltage generator/inverter (20) is controlled to be conductive.

11. Circuitry arrangement according to claim 1 or claim 4,
characterized in that,
a load capacitance (C7) is connected in parallel with the primary or secondary winding of the power transformer (Tr).

12. Circuitry arrangement according to any preceding claim,
characterized in that,
the high frequency oscillation inception time point (t_{z}, α1 + α2) is displaceable within a half-wave of the intermediate circuit voltage (u_{N}) by comparison (V₆) of a predetermined or predeterminable threshold value (u_{Z}) with a temporally continuously variable (R₄, R₅, P) increasing control signal (u_{St}),
whereby a temporal delay of the high frequency oscillation inception time point (t_{z}, α1, α2) from the start (α=0°) of the half-wave to the end (α=180°) of the half-wave corresponds to a reduction of the lamp brightness (NV) from the maximum brightness down to zero.

13. Circuitry arrangement according to any preceding claim,
characterized in that,
the high frequency oscillations of the a.c. voltage generator/inverter (20) initiated by the way of a triggering element such as a triggering diode (V6), are inherently stable up to the end of a respective intermediate circuit voltage half-wave (u_{N}), unless a protection circuit arrangement, such as excess temperature monitoring or maximum current monitoring, is activated during the high frequency oscillations.

14. Method for variation of the strength of light of at least one low-voltage halogen light/lamp, employing high frequency oscillation packets (u_{W}) which can be supplied periodically by way of a power transformer (Tr) of the low-voltage halogen lamp (NV), whereby the oscillation inception time point (T_{z}, α1, α2) can be displaced (α) within a half-wave time period of a pulsing supply voltage (u_{N}) in dependence upon a brightness control signal (U_{St}, U_{Z}) or a corresponding resistance variation (P), whereby in operation a high frequency periodical (V2, V6) synchronization of the oscillation process occurs,
characterized in that,
additionally there occurs a low frequency periodical synchronization (R16, V13) or resetting/initialization of the system process determining the oscillation inception time point (T_{Z}, α1, α2), in particular the time-dependent charging of a capacitive element (C1), so that at the start of each half-wave of the pulsing supply voltage (u_{N}) the same initial conditions are provided.

15. Method according to claim 14,
characterized in that,
a high frequency oscillation packet (u_{W}) initiated at the displaceable oscillation inception time point (t_{Z}, α1, α2) increases in amplitude and/or decreases in amplitude with the driving non-smoothed supply voltage (u_{N}), in dependence upon the sign of the slope of the supply voltage half-wave (u_{N}),
and in that an abrupt blocking of the oscillations of the oscillation packet (u_{W}, i_{L}) occurs when the temperature of the power transformer (Tr) and/or the amplitude of the high frequency oscillation current (i_{L}) exceeds a predetermined limit value (iₘₐₓ/ ϑₘₐₓ).

16. Use of the brightness control circuitry arrangement according to claim 1 in an externally commutated inverter as a.c. voltage generator (20) with free external selection of the oscillator frequency with the brightness variation of a low-voltage halogen lamp (NW).

## Revendications

1. Agencement de circuit de réglage de luminosité, notamment pour un circuit de charge comportant un appareil d'éclairage halogène à basse tension (NV) et, branché en amont de celui-ci, un transformateur (Tr) de puissance ou un transmetteur de puissance, destiné à faire varier la puissance efficace prélevée au niveau d'une alimentation en tension alternative et délivrée à un circuit de charge (Tr, NV),
avec un générateur (20) de tension alternative à haute fréquence qui, à partir d'une tension de circuit intermédiaire (u_{N}) à basse fréquence redressée faiblement lissée ou non lissée, délivre une tension alternative de sortie (u_{W}) au circuit de charge (Tr, NV),
avec un filtre passe-bas qui se compose d'une résistance variable (R4, R5, P) et d'une capacité de synchronisation (C1) branchées en série et
avec un premier circuit de synchronisation (V2, V6) qui est connecté côté entrée à la capacité de synchronisation (C1) du filtre passe-bas et côté sortie au générateur (20) de tension alternative à haute fréquence et qui suite à un signal appliqué côté entrée active le générateur (20) de tension alternative,
caractérisé par
un deuxième circuit de synchronisation (V5, V7, TH; R16, V13) dont la sortie est connectée à la capacité de synchronisation (C1) du filtre passe-bas (PT1) et qui est commandé côté entrée par la tension redressée (u_{N}) du circuit intermédiaire ou par l'alimentation en tension alternative,
circuit au moyen duquel la capacité de synchronisation (C1) est sensiblement déchargée avant le début d'une demi-alternance à basse fréquence de la tension d'alimentation (u_{N}) ou avant le début d'une phase de chargement de la capacité de synchronisation (C1) aux fins de créer des conditions de début identiques ou
au moyen duquel la capacité de synchronisation (C1) est déchargée par l'intermédiaire d'un circuit de relaxation à retour automatique lorsque la tension (u_{N}) non lissée du circuit intermédiaire descend en-dessous d'un seuil de synchronisation (u_{H}).

2. Agencement de circuit selon la revendication 1, caractérisé par le fait que le générateur (20) de tension alternative est agencé sous forme d'onduleur en demi-pont et la tension alternative (u_{W}) unipolaire de sortie prélevée au niveau de la borne médiane (M1) de deux semi-conducteurs (V3, V4) de puissance montés en série est appliquée à la première borne d'entrée du transformateur (Tr), par le fait que la deuxième borne d'entrée du transformateur (Tr) peut être connectée à une autre borne médiane (M2) d'un montage série (branche capacitive) de deux capacités (C9, C10) et par le fait que la branche capacitive (C9, C10) et la branche semi-conductrice sont alimentées par la tension continue (u_{N}) non lissée du circuit intermédiaire et la borne (M2) médiane supplémentaire fournit en courant alternatif sensiblement la moitié (u_{N}/2) de la tension continue du circuit intermédiaire.

3. Agencement de circuit selon la revendication 1, caractérisé par le fait que le générateur (20) de tension alternative est agencé en pont complet, deux branches parallèles étant prévues, lesquelles branches comportent chacune un montage en série d'un commutateur de puissance à semi-conducteur supérieur (V3) et inférieur (V4) et par le fait que le transformateur de puissance (Tr) est branché entre les bornes médianes (M1, M2) respectives des deux branches et que lesdites deux branches elles-mêmes sont connectées en parallèle à la tension (u_{N}) redressée et non lissée du circuit intermédiaire.

4. Agencement de circuit selon l'une des revendications précédentes, caractérisé par le fait que le générateur (20) de tension alternative ou la branche (V3, V4) d'onduleur à semi-conductrice est agencée sous forme d'onduleur à commutation automatique à couplage magnétique (Ü, T1A, T1B, T1C, T1D) ou optique entre le courant de charge (i_{L}) qui circule dans l'enroulement primaire du transformateur de puissance (Tr) et l'onduleur (20, V3, V4).

5. Agencement de circuit selon la revendication 1, caractérisé par le fait que le deuxième circuit de synchronisation (V5, V7, TH; R16, V13) décharge la capacité de synchronisation (C1) du filtre passe-bas (PT1) lorsque le signal de commande (u_{N}) appliqué à son entrée chute en-dessous du seuil de synchronisation (u_{H}) prédéterminé et par le fait que le deuxième circuit de synchronisation (V5, V7, TH; R16, V13) libère la capacité de synchronisation (C1) du filtre passe-bas (PT1) lorsque le signal de commande (u_{N}) appliqué à son entrée est supérieur au seuil de synchronisation (u_{H}).

6. Agencement de circuit selon la revendication 2 ou la revendication 4, caractérisé par le fait qu'un élément assurant le découplage entre la partie de puissance et la partie de commande du circuit de réglage de la luminosité, de préférence une diode (V11) montée dans le sens passant, est monté en série avec le circuit parallèle formé de la branche semi-conductrice (V3, V4) et la branche capacitive (C9, C10).

7. Agencement de circuit selon la revendication 1 et/ou la revendication 5, caractérisé par le fait que le deuxième circuit de synchronisation (V5, V7, TH; R16, V13) comporte un montage série d'une résistance de décharge (R 16) et d'un semi-conducteur ou d'un relais de commutation commandé (V13) ou par le fait que le deuxième circuit de synchronisation (V5, V7, TH; R16, V13) comporte un thyristor comme circuit de bascule à retour automatique.

8. Agencement de circuit selon la revendication 1 ou la revendication 4, caractérisé par le fait qu'une bascule à retour automatique, notamment un thyristor (TH), bloque brutalement le générateur de tension alternative/l'onduleur (20) pour au moins la durée de la demi-alternance (u_{N}) restante de la tension du réseau et/ou décharge ou ponte la capacité de synchronisation (C1) lorsque le courant de charge (i_{L}) à haute fréquence dépasse une valeur seuil (iₘₐₓ) prédéterminée.

9. Agencement de circuit selon la revendication 1, la revendication 4 ou la revendication 8, caractérisé par le fait qu'un élément de mesure de température (R6, NTC) est disposé dans le transformateur de puissance (TR), en particulier au voisinage immédiat sur le plan thermique de son (ses) enroulement(s) secondaire(s) alimentant la (les) lampes à basse tension et par le fait qu'une bascule à retour automatique, notamment un/le thyristor (TH) bloque brutalement le générateur de tension alternative/l'onduleur (20) pour au moins la demi-alternance (u_{N}) restante de la tension du réseau à basse fréquence et/ou décharge ou ponte la capacité de synchronisation (C1) lorsque la température (ϑ) mesurée dépasse une valeur seuil (ϑₘₐₓ) prédéterminée, la limitation de température (ϑₘₐₓ) mentionnée agissant en fonction du courant de charge de manière telle que pour une température (ϑ) plus basse du transformateur de puissance (Tr) une valeur maximale plus élevée et pour une température (ϑ) plus élevée du transformateur de puissance (Tr) une valeur maximale abaissée en conséquence du courant de charge (i_{L}) à haute fréquence soit admise et que ladite valeur maximale soit chaque fois inférieure à la/une valeur seuil (iₘₐₓ).

10. Agencement de circuit selon la revendication 1 ou la revendication 4, caractérisé par le fait qu'une décharge périodique de la capacité de synchronisation (C1) est opérée par l'intermédiaire d'une diode (V2) dont la cathode est tournée vers la tension alternative (u_{W}, M1) de sortie, à chaque fois que l'un (V4) des deux commutateurs à semi-conducteur (V3, V4) du générateur de tension alternative/de l'onduleur (20) est commuté à l'état passant.

11. Agencement de circuit selon la revendication 1 ou la revendication 4, caractérisé par le fait qu'une capacité de charge (C7) est branchée en parallèle avec l'enroulement primaire ou de l'enroulement secondaire du transformateur de puissance (Tr).

12. Agencement de circuit selon une des revendications précédentes, caractérisé par le fait que l'instant de début de l'oscillation à haute fréquence (t_{z}, α1+α2) peut être décalé à l'intérieur d'une demi-alternance de la tension (u_{N}) du circuit intermédiaire par comparaison (V6) d'une valeur seuil (u_{z}) prédéterminée ou pouvant être prédéterminée avec un signal de commande (u_{St}) croissant pouvant être réglé de manière continue (r4, r5, P) dans le temps, un retard de l'instant de début de l'oscillation à haute fréquence (t_{z}, α1+α2) depuis le début (α = 0°) jusqu'à la fin (α = 180°) de la demi-alternance correspondant à une baisse de la luminosité de la lampe (NV) de la luminosité maximale jusqu'à zéro.

13. Agencement de circuit selon une des revendications précédentes, caractérisé par le fait que les oscillations à haute fréquence du générateur de tension alternative/de l'onduleur (20) déclenchées par l'intermédiaire d'un élément déclencheur tel qu'une diode de déclenchement (V6) sont intrinsèquement stables jusqu'à la fin d'une demi-alternance (u_{N}) correspondante de la tension du circuit intermédiaire à moins qu'un circuit de protection, tel qu'un dispositif de surveillance de température ou un dispositif de surveillance du courant maximal, soit activé pendant les oscillations à haute fréquence.

14. Procédé pour faire varier l'intensité lumineuse d'au moins une lampe halogène à basse tension utilisant des paquets d'oscillations (u_{W}) à haute fréquence qui sont envoyés de manière périodique à la lampe halogène à basse tension (NV) par l'intermédiaire d'un transformateur de puissance (Tr), l'instant de début de l'oscillation à haute fréquence (t_{z}, α1+α2) pouvant être décalé en fonction d'un signal de commande de luminosité (U_{St} U_{Z}) ou d'une variation correspondante de la résistance (P) à l'intérieur de l'intervalle de temps d'une demi-alternance d'une tension d'alimentation pulsatoire (u_{N}), une synchronisation du phénomène d'oscillation avec une périodicité à fréquence élevée (V2, V6) étant opérée en fonctionnement, caractérisé par le fait qu'une synchronisation avec une périodicité à fréquence basse (R16, V13) ou une remise à zéro/initialisation du processus qui détermine l'instant de début de l'oscillation à haute fréquence (t_{z}, α1+α2), notamment le chargement dans le temps d'un élément capacitif (C1) est opérée de manière à créer des conditions de démarrage identiques au début de chaque demi-alternance de la tension d'alimentation (u_{N}).

15. Procédé selon la revendication 14, caractérisé par le fait qu'un paquet d'oscillations à haute fréquence (u_{W}) initié à l'instant modifiable de début de l'oscillation (t_{z}, α1+α2) commence et/ou se termine avec la tension d'alimentation (U_{N}) pilote non lissée, en fonction du signe de la pente des demi-alternances de tension d'alimentation (u_{N}) et par le fait qu'un blocage brutal des oscillations du paquets d'oscillations (u_{W}, i_{L}) a lieu lorsque la température du transformateur de puissance (Tr) et/ou l'amplitude du courant d'oscillation à haute fréquence (i_{L}) dépasse une valeur seuil (iₘₐₓ, ϑₘₐₓ) prédéterminée.

16. Application de l'agencement de circuit de réglage de luminosité selon la revendication 1 à un onduleur à commande extérieure utilisé comme générateur de tension alternative (20) avec détermination externe libre de la fréquence de l'oscillateur pour le réglage de la luminosité d'une lampe halogène à basse tension (NV).
